# EUROPÄISCHE PATENTANMELDUNG

(11) **EP 4 067 264 A1**
(43) Veröffentlichungstag der Anmeldung: **05.10.2022**
(21) Anmeldenummer: 21166762.1
(22) Anmeldetag: 01.04.2021
(51) Int. Cl.: B65G 1/04, B65G 1/137, B65G 60/00, B65G 65/00

(54) **SORTIERVORRICHTUNG**

(71) Anmelder: Martistel LTD, 3107 Limassol (CY)
(72) Erfinder: RAZUMOV, Sergey, 2047 Strovolos (CY)
(74) Vertreter: Jeck, Anton

(57) **Zusammenfassung**

System zum Speichern und Organisieren von Materialien, umfassend:
ein Speichersystem (110),
mindestens eine erste Schicht (100), die mehrere Lagerplätze umfasst, die bevorzugt in Reihen in zwei horizontalen Richtungen senkrecht zueinander angeordnet sind und dazu dienen, Boxen als Lagerplatz für die Materialien in Stapeln aufzunehmen,
mindestens eine Transportvorrichtung (130), welche einen Aufnahmebereich für einzelne Boxen oder Stapel von Boxen zum oder aus dem Speichersystem aufweist,
ein Transportsystem, insbesondere eine Schienenanordnung, auf welchem die mindestens eine Transportvorrichtung (130) vom, zum und innerhalb des Speichersystems verfahrbar und individuellen Stapeln von Boxen in dem Speichersystem (110) zustellbar gelagert ist und
eine Sortiervorrichtung (140) mit
- mindestens einem Greifer (142), welche über das Transportsystem mit dem Speichersystem verbunden und ausgebildet ist, eine Untermenge von Boxen oder alle Boxen eines Stapels von Boxen von der Transportvorrichtung aufzunehmen, anzuheben und an die Transportvorrichtung oder eine weitere Transportvorrichtung (130) wieder abzugeben und
- mindestens einem zweiten Greifer (142), welchem die Transportvorrichtung in einem Ladebereich des Greifers zustellbar ist und ausgebildet ist, eine Untermenge der verbleibenden Boxen oder alle verbleibenden Boxen des Stapels von der Transportvorrichtung (130) aufzunehmen, oder
- einem beweglichen Ablagebereich (152), welcher dem Greifer bzw. einem Ladebereich des Greifers zustellbar ist, von einer Transportvorrichtung aufgenommene Boxen von dem Greifer zu übernehmen und aus dem Ladebereich des Greifers in einen Ablagebereich zur Zwischenlagerung zu verschieben, wodurch der Ladebereich des Greifers für eine Aufnahme oder Abgabe von Boxen an/von einer Transportvorrichtung freigegeben ist, während die aufgenommenen Boxen in dem Ablagebereich zwischengelagert sind.

## Beschreibung

Die vorliegende Erfindung betrifft eine Sortiervorrichtung gemäß Anspruch 1.

Zum besseren Verständnis des Wesens der vorgeschlagenen technischen Lösung folgt nachstehend die Beschreibung eines spezifischen Implementierungsbeispiels, das kein einschränkendes Beispiel für die praktische Implementierung eines automatischen Systems zum Speichern von Materialien und Sammeln von Sätzen davon ist.

Die beanspruchte Erfindung wird anhand der beigefügten Zeichnungen näher erläutert. Es zeigen:
- Fig. 1: ein allgemeines Diagramm eines automatischen Systems,
- Fig. 2: ein automatisches System, Vorderansicht, perspektivische Ansicht,
- Fig. 3: ein schematisches Diagramm einer mobilen Transportvorrichtung,
- Fig. 4: eine allgemeine Ansicht eines mobilen Transportgeräts,
- Fig. 5: ein mobiles Transportgerät mit einem Stapel von Schalen an Bord,
- Fig. 6: ein schematisches Diagramm einer Vorrichtung zum Heben von Stapeln von Schalen,
- Fig. 7: eine Vorrichtung zum Anheben von Stapeln von Schalen, allgemeine Ansicht,
- Fig. 8: eine Vorrichtung zum Anheben von Stapeln von Tabletts, die mit Stapeln von Tabletts interagieren, und eine mobile Transportvorrichtung,
- Fig. 9 - 11: eine alternative Ausführungsform mit einem Greifer und einem beweglichen Ablagebereich, welche den zweiten Greifer ersetzen kann mit vorteilhaftem Bewegungsablauf und
- Fig. 12: eine Kombination der ersten und zweiten Ausführungsform, also mit mindestens einem weiteren Greifer und mindestens einem beweglichen Ablagebereich.

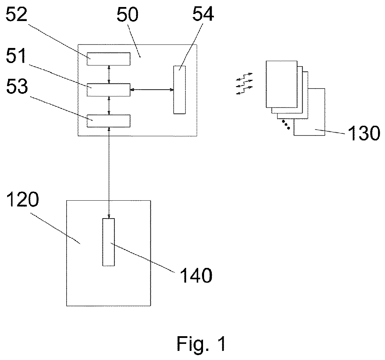

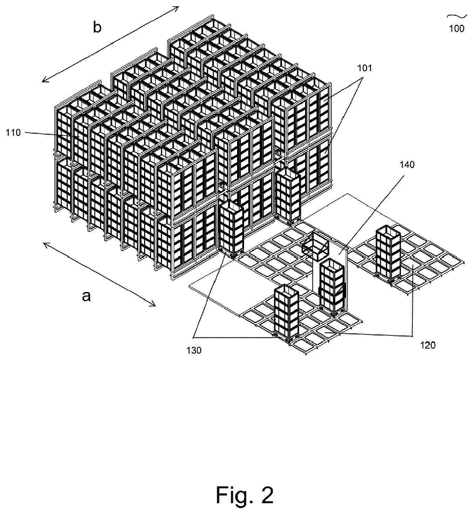

Wie in den Figuren 1 und 2 gezeigt, weisen das automatische Boxen-SpeicherSystem und/oder das Organisationssystem bevorzugt ein Steuermodul 50 und/oder ein Speichersystem 110 und/oder einen Boxen-/Schalen-Sortierbereich 120 auf. Das Steuermodul 50 weist einen zentralen Steuerprozessor 51 und/oder eine Auftragsverarbeitungs-Einheit 52 und/oder eine Schnittstelle 53 und/oder eine drahtlose Schnittstelle 54 auf, bevorzugt zu der Einrichtung 120 und/oder 140.

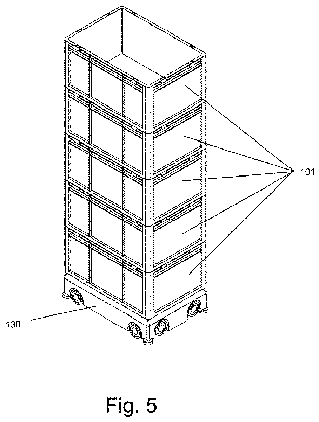

Mehrere mobile Transportvorrichtungen 130 können über eine drahtlose Schnittstelle 54 von einem Zentralprozessor 50 gesteuert werden und/oder sind bereitgestellt, sowohl leere also auch volle Boxen/Schalen als auch gestapelte Boxen/Schalen 101 (Fig. 5) sowohl innerhalb des Speichersystems 110 als auch (und/oder) in dem Sortierbereich der Schalen 120 sowie zwischen den genannten Bereichen zu transportieren.

Wie in Fig. 2 dargestellt, sind in dem Boxen/Schalen-Sortierbereich 120 mindestens eine, bevorzugt mindestens zwei Vorrichtungen, zum Anheben 140/142 von Stapeln von Boxen/Schalen 130 vorhanden. Insbesondere kann die Vorrichtung 140/142 ausgebildet sein, Boxen/Schalen von einer Transportvorrichtung, bevorzugt in dem Sortierbereich, zu heben. Es können sowohl alle Boxen/Schalen als auch eine Teilmenge von Boxen/Schalen von der Transportvorrichtung angehoben bzw. aufgenommen werden. Zusätzlich kann der Boxen/Schalen-Sortierbereich 120 mehrere Pufferplätze enthalten, um mehrere TMU 130 oder deren Boxen aufzunehmen, falls diese vorzeitig ankommen und auf ihre Weiterverarbeitung warten.

Die Schalen innerhalb des Speichersystems 110 sind in Stapeln von vorzugsweise n Schalen übereinander gelagert, in einem speziellen Fall ist n >= 5, wie in den Figuren dargestellt.

Wie in Fig. 2 kann der Speicherbereich von gestapelten Schalen 110 mehrstöckig mit mehreren separaten Stapeln 110 übereinander ausgebildet sein.

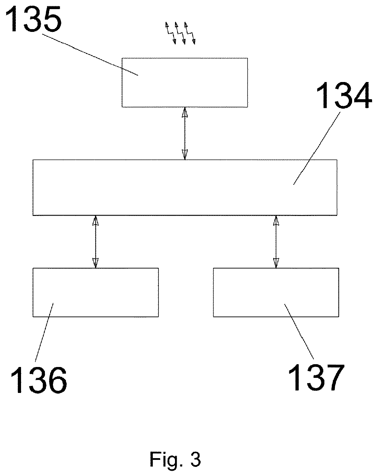

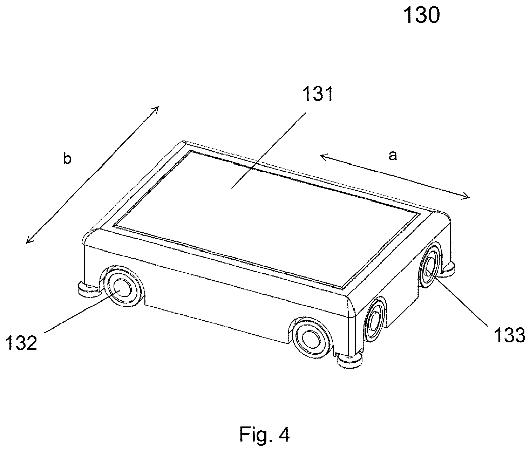

Die in Fig. 3 - 5 gezeigte Transportvorrichtung 130 umfasst bevorzugt einen Hubtisch 131, der zum Aufnehmen und Transportieren von Schalen/Boxen 101 oder Stapeln von Schalen/Boxen davon ausgelegt ist, und zwei Gruppen von Antriebsrädern 132 und 133, die die Vorrichtung in zwei zueinander senkrechten horizontalen Richtungen bewegen sollen.

Der konstruktive Aufbau der TMU 130 bzw. der Lagereinrichtung 110 ist derart hergestellt, dass eine leere Vorrichtung 130 mit seinem Hubtisch 131 ohne darauf befindliche/transportierte Schalen/Box im Speicherbereich 110 jeweils unterhalb der Stapel hindurch frei beweglich verfahrbar ist. Dadurch kann die TMU auch Stapeln zugestellt werden, die sich in weiter hinten liegenden Bereichen des Speicherbereichs befinden, ohne einen Umweg um den Speicherbereich selbst herum fahren zu müssen.

Die mobile Transportvorrichtung 130, welche bevorzugt Teil des erfindungsgemäßen Lagers und Sortiersystems ist, kann auf jede bekannte Weise gesteuert werden. Insbesondere kann eine eingebettete (industrielle) Steuerung 134 mit einer drahtlosen Schnittstelle 135 zur Kommunikation mit dem Zentralprozessor 51 des automatischen Systems zur Steuerung verwendet werden. Die Steuerung 134 steuert die Treiber 136 der Antriebe der Räder 132 und 133 für die Bewegung, bevorzugt entlang von Schienen, in vorzugsweise zwei Richtungen in einer Ebene und/oder den Treiber 137 der vertikalen Position der Räder 132, 133, über welchen die Räder angehoben werden können und dadurch die Unterseite des Hubtisches den Boden berühren kann und/oder den Zustand des Hubtisches 131 (Höhenverstellbarkeit). Die Schienen können in dem Speicherbereich 110 und/oder im Sortierbereich, also auch zwischen den Bereichen, verbindend vorliegen und können als Grundlage für die Bewegung der Transportvorrichtungen 130 bereitgestellt sein.

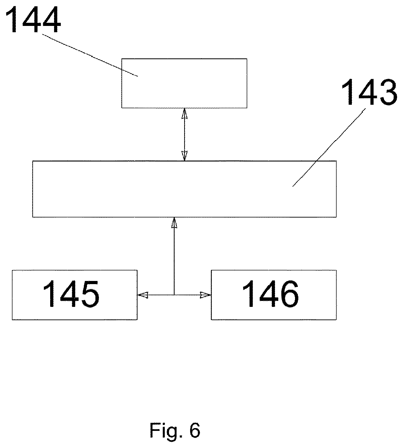

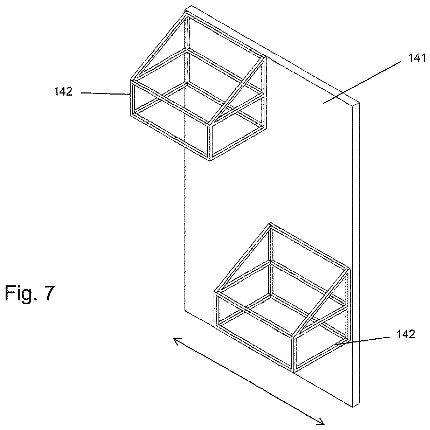

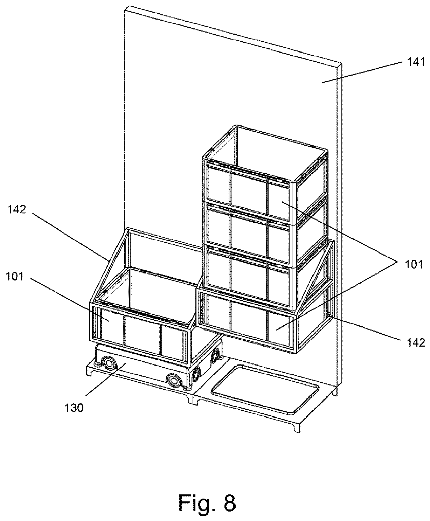

In den Fig. 6 bis 8 wird eine Vorrichtung 140 zum Heben von einzelnen oder von Stapeln von Boxen/Schalen mit einen (Grund)Körper 141 und mindestens zwei Greifern 142 gezeigt, die sich in vertikaler Richtung relativ zu dem Körper 141 bewegen und das Ergreifen/Aufnehmen und Heben einer beliebigen Anzahl von Boxen/Schalen 101 von oder auf eine TMU 130 im Betriebsbereich der Greifer 142 ermöglichen. Bevorzugt befindet sich die TMU für das Aufnehmen/Ergreifen der Boxen/Schalen durch einen Greifer unterhalb des Greifers. Der Greifer kann mit einem Rahmen bereitgestellt sein, welcher so dimensioniert ist, dass er über einen Stapel von Boxen übergestülpt werden kann. Die Greifer können dabei mit den Schalen/Boxen zustellbaren Halteelementen/ Haltenasen/Haltebügeln oder sonstigen Einrichtungen ausgestattet sein, welche ausgebildet sind, Boxen/Schalen 101, welche dem Greifer (übergestülpt, siehe z. B. Fig. 8) zugestellt sind, am Greifer 142 zu halten.

Die Vorrichtung zum Heben von Stapeln von Schalen 140 kann auch auf irgendeine bekannte Weise gesteuert werden. Insbesondere kann eine eingebettete industrielle Steuerung 143 verwendet werden, die eine Schnittstelle 144 zur Kommunikation mit dem Zentralprozessor 51 des automatischen Systems 100 aufweist. Bevorzugt steuert die Steuerung 143 die Treiber 145 und 146 der jeweiligen Greiferantriebe 142 zum Aufnehmen und Anheben der (Stapel von) Schale(n)/ Box(en) 101 in vertikaler Richtung.

Fig. 8 zeigt die Wechselwirkung der Vorrichtung 140 zum Heben von Stapeln von Schalen mit Schalen/Boxen 101, die auf der mobilen Transportvorrichtung 130 stehen. Wie zu erkennen ist, nähert sich die mobile Transportvorrichtung 130 zuerst dem ersten (rechten) Greifer 142 der Vorrichtung 140, wobei der erste Greifer 142 im vorliegenden Beispiel ausgewählt ist, die vier oberen Boxen/Schalen 101 des Stapels, die auf der TMU 130 stehen, anzuheben.

Danach bewegt sich die TMU 130 in einer ersten horizontalen Richtung unter den zweiten (linken) Greifer 142 der Vorrichtung 140. Dann hebt der zweite Greifer 142 die (verbleibende) Schale/Box 101 von der TMU 130 an.

Anschließend bewegt sich die TMU unter dem ersten Greifer 142 der Vorrichtung 140, wodurch der zuerst abgehobene Stapel der Schalen/Boxen 101 auf die TMU 130 gelegt wird. Danach bewegt sich die TMU 130 wieder unter dem zweiten (entsprechend angehobenen) Greifer 142 der Vorrichtung 140, die die zuvor untere Schale/Box 101 des Stapels nun oben auf dem Stapel platziert. Nach der vorliegenden Erfindung kann es sich bei den beschriebenen und beanspruchten "Systemen" um Vorrichtungen und Einrichtungen handeln.

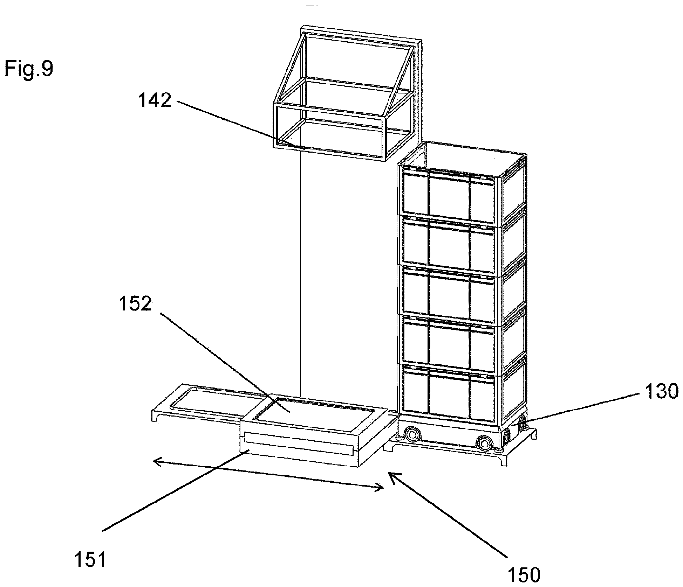

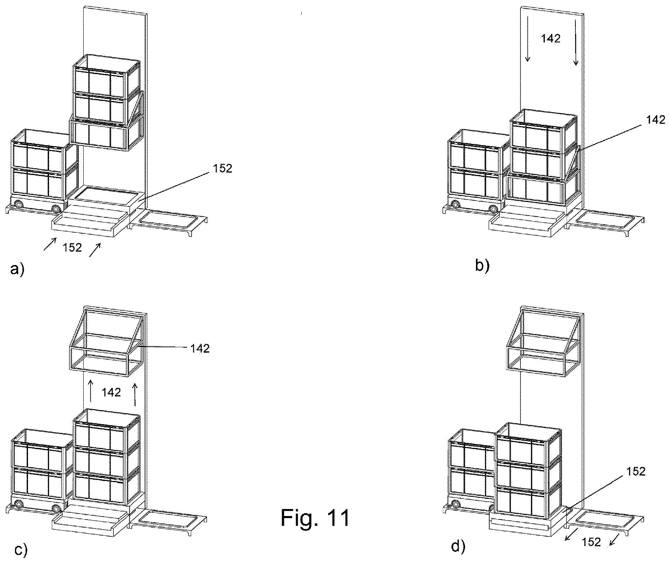

Alternativ oder ergänzend kann es vorgesehen sein, anstatt einem zweiten Greifer zusätzlich zu diesem einen beweglichen Ablagebereich in der Nähe des Greifers vorzusehen (Fig. 9 - 11). Ein beweglicher Teil 152 des Ablagebereichs, beispielsweise eine bewegliche Ablage oder ein (verschiebbares/verlagerbares) Förderband, kann dabei dem Greifer 142 zustellbar sein, wodurch der Greifer aufgenommene Boxen an den Ablagebereich übergeben kann (z. B. auf diesem ablegen - vgl. Fig 11b). Der bewegliche Ablagebereich kann dann von dem Greifer (unterhalb des Greifers) wegbewegt werden (Fig. 11c → 11d), wodurch ein Ladebereich (unterhalb) des Greifers, also ein Bereich freigegeben ist (Fig. 11d), in welchem eine Transportvorrichtung 130 vorgesehen sein kann, so dass der Greifer dessen Boxen übernehmen oder an diese abgeben kann,

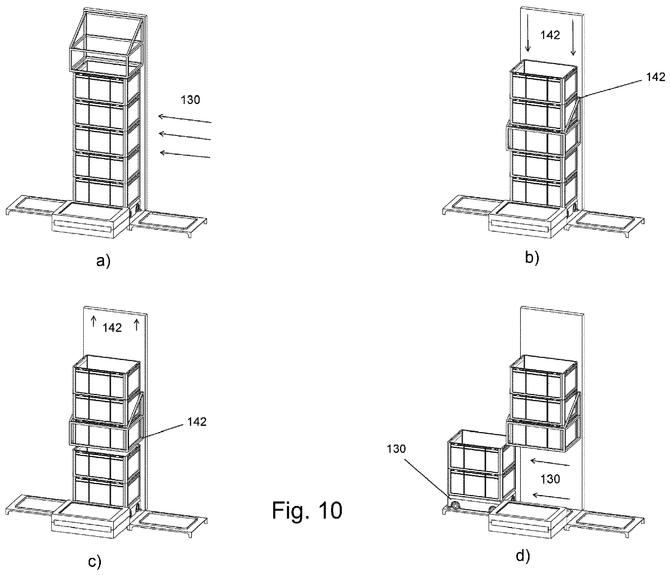

Dadurch ist es ermöglicht, dass der Greifer beispielsweise zunächst einen oder mehrere Boxen einer Transporteinrichtung übernimmt (Fig. 10b → 11c), diese dann an den Ablagebereich übergibt (Fig. 11a → 11b → 11c) und dadurch für die Aufnahme weiterer Boxen freigegeben ist. Befindet sich eine leere Transportvorrichtung neben dem/bei dem beweglichen Ablagebereich und/oder im Ladebereich des Greifers, kann der bewegliche Ablagebereich die zwischengelagerten Boxen (Untermenge) auf die Transporteinrichtung wieder übergeben. Alternativ kann der Ablagebereich die Boxen zu gegebener Zeit wieder an den Greifer 142 übergeben, wodurch insgesamt eine Umsortierung der Boxen eines oder mehrerer Transportvorrichtungen ermöglicht ist. Anschließend kann die Transportvorrichtung mit der Untermenge an Boxen zur weiteren Bearbeitung abgeführt werden, oder auf die Untermenge können die zusätzlichen Boxen, welche von dem Greifer aufgenommen sind, aufgeladen werden. Dadurch kann eine um Sortierung von Boxen/eines Stapels auf einer Transportvorrichtung mittels entweder mindestens zweier Greifer oder durch mindestens einen Greifer in Kombination mit dem voranstehend beschriebenen mobilen Ablagebereich ermöglicht sein. Die vorliegende Erfindung betrifft eine entsprechende Vorrichtung sowie ein entsprechendes Verfahren.

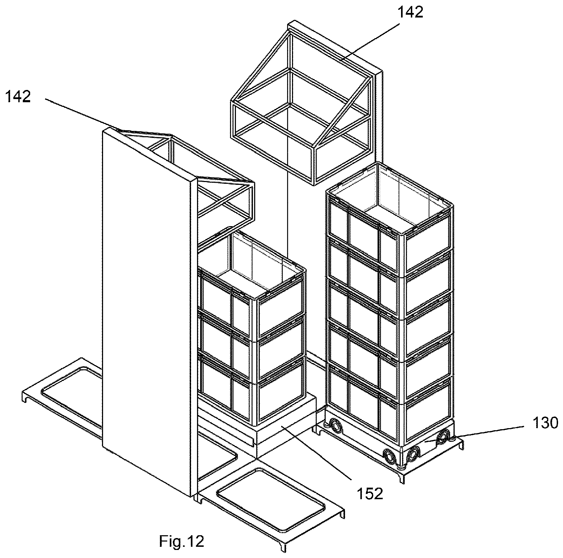

Grundsätzlich ist es auch denkbar, eine Kombination der ersten und der zweiten Ausführungsform vorzusehen, wie es beispielhaft aus Fig. 12 hervorgeht. Hierdurch kann sowohl ein Austausch von Boxen wie nach der Ausführungsform der Fig. 9 - 11 erfolgen, aber zusätzlich auch ein Austausch von Boxen zwischen unterschiedlichen Transportvorrichtungen 130 oder die Übergabe von Boxen von einer Transportvorrichtung an eine zweite.

Eine mögliche Umsortierung mittels der Ausführungsform nach Figur 11 könnte beispielsweise folgendermaßen erfolgen:
Eine erste Transportvorrichtung 130 wird in einen Bereich unterhalb eines ersten der beiden dargestellten Greifer 142 verfahren. Dieser erste Greifer 142 übernimmt eine beliebige Anzahl von Boxen von der Transportvorrichtung 130. Anschließend übergibt der erste Greifer 142 die Boxen oder eine Untermenge von Boxen an den beweglichen Teil 152 des Ablagebereichs, welcher dafür diesem ersten Greifer zustellbar ist.

Auf der anderen Seite, bei dem zweiten Greifer 142, kann dieser nun entweder die Boxen von dem Ablagebereich übernehmen, welcher dafür dem zweiten Greifer 142 zugestellt wird, oder der Greifer ist bereits mit Boxen beladen, welche der Greifer auf den Stapel von Boxen des Ablagebereichs ablegen kann, soweit der Ablagebereich dem Greifer zugestellt ist. Anschließend kann der Greifer wiederum alle Boxen oder eine Untermenge der zusammengeführten Boxen anheben und, nachdem der Ablagebereich aus dem Ladebereich des zweiten Greifers (zusammen mit den restlichen Boxen, soweit zutreffend) zurückgezogen ist, die gehaltenen Boxen des zweiten Greifers auf eine Transporteinrichtung 130 übergeben, welche in dem Ladebereich des zweiten Greifers 142 positioniert wird.

So kann ein Umschichten zwischen verschiedenen Transportvorrichtungen 130 und/oder eine Änderung der Reihenfolge von Boxen einer Transportvorrichtung 130 ermöglicht werden.

## Patentansprüche

1. System zum Speichern und Organisieren von Materialien, umfassend:
ein Speichersystem (110),
mindestens eine erste Schicht (100), die mehrere Lagerplätze umfasst, die bevorzugt in Reihen in zwei horizontalen Richtungen senkrecht zueinander angeordnet sind und dazu dienen, Boxen als Lagerplatz für die Materialien in Stapeln aufzunehmen,
mindestens eine Transportvorrichtung (130), welche einen Aufnahmebereich für einzelne Boxen oder Stapel von Boxen zum oder aus dem Speichersystem aufweist,
ein Transportsystem, insbesondere eine Schienenanordnung, auf welchem die mindestens eine Transportvorrichtung (130) vom, zum und innerhalb des Speichersystem(s) verfahrbar und individuellen Stapeln von Boxen in dem Speichersystem (110) zustellbar gelagert ist und
eine Sortiervorrichtung (140) mit
- mindestens einem Greifer (142), welche über das Transportsystem mit dem Speichersystem verbunden und ausgebildet ist, eine Untermenge von Boxen oder alle Boxen eines Stapels von Boxen von der Transportvorrichtung aufzunehmen, anzuheben und an die Transportvorrichtung oder eine weitere Transportvorrichtung (130) wieder abzugeben und
- mindestens einem zweiten Greifer (142), welchem die Transportvorrichtung in einem Ladebereich des Greifers zustellbar ist und ausgebildet ist, eine Untermenge der verbleibenden Boxen oder alle verbleibenden Boxen des Stapels von der Transportvorrichtung (130) aufzunehmen, oder
- einem beweglichen Ablagebereich (152), welcher dem Greifer bzw. einem Ladebereich des Greifers zustellbar ist, von einer Transportvorrichtung aufgenommene Boxen von dem Greifer zu übernehmen und aus dem Ladebereich des Greifers in einen Ablagebereich zur Zwischenlagerung zu verschieben, wodurch der Ladebereich des Greifers für eine Aufnahme oder Abgabe von Boxen an/von eine(r) Transportvorrichtung freigegeben ist, während die aufgenommenen Boxen in dem Ablagebereich zwischengelagert sind.

2. System zum Speichern und Organisieren von Materialien nach Anspruch 1,
**dadurch gekennzeichnet,**
**dass** der Greifer höhenverstellbar ist und ausgebildet ist, Boxen von einer Transportvorrichtung (130) anzuheben.

3. System zum Speichern und Organisieren von Materialien nach Anspruch 1 oder 2,
**dadurch gekennzeichnet,**
**dass** der bewegliche Ablagebereich (152) als verlagerbare Fläche oder als Förderband ausgebildet ist, die dem Ladebereich des Greifers zustellbar ist.

4. System zum Speichern und Organisieren von Materialien nach einem der Ansprüche 1 bis 3,
**dadurch gekennzeichnet,**
**dass** das Transportsystem bereichsweise unterhalb der Greifer (142) angeordnet ist und dort den Ladebereich für den oder die Greifer (142) bildet.

5. System zum Speichern und Organisieren von Materialien nach Anspruch 1 oder 2,
**dadurch gekennzeichnet,**
**dass** der bewegliche Ablagebereich (152) dem jeweiligen Ladebereich einer Mehrzahl von Greifern (142) zustellbar ist.

6. Sortiervorrichtung für ein System nach den Ansprüchen 1 bis 5, mit
- mindestens einem Greifer (142), der über ein Transportsystem mit dem Lagersystem verbunden ist und ausgebildet ist, von einer Transporteinrichtung (130), welche in einem Ladebereich des Greifers platziert ist, eine Teilmenge von auf der Transporteinrichtung (130) angeordneten Boxen oder alle diese Boxen zu halten und anschließend wieder an die Transportvorrichtung (130) oder auf eine weitere Transportvorrichtung (130) zu übergeben,
- mit mindestens einem zweiten Greifer (142) und einem Ladebereich für den Greifer, dem die Transportvorrichtung (130) zustellbar ist, wobei der zweite Greifer (142) konfiguriert ist, von der in dem Ladebereich angeordneten Transportvorrichtung (130) eine Teilmenge der verbleibenden Boxen oder alle verbleibenden Boxen aufzunehmen
oder
- mit einer Lagereinrichtung (150) mit einer festen Basis (151) und einem beweglichen Lagerbereich (152), welcher zwischen der Lagerposition und einer Beladeposition in dem Ladebereich des zumindest einen Greifers (142) verlagerbar ist und konfiguriert ist, vom Greifer (142) gehaltene Boxen aufzunehmen und außerhalb des Ladebereichs zwischenzulagern, wodurch ein Zugang zum Ladebereich des Greifers (142) freigegeben ist.

7. Sortiervorrichtung nach Anspruch 6,
**dadurch gekennzeichnet,**
**dass** sowohl ein zweiter Greifer (142) als auch eine Lagereinrichtung (150) vorgesehen sind, wobei die Lagereinrichtung (150) zwischen den Lagerbereichen der beiden Greifer angeordnet ist, der bewegliche Lagerbereich (152) der Lagereinrichtung (150) dem jeweiligen Ladebereich beider Greifer (142) zustellbar ist und ausgebildet ist, auf dem beweglichen Lagerbereich vorgesehene Boxen an den jeweiligen Greifer zu übergeben bzw. Boxen von den Greifern zu übernehmen.

8. Verfahren zum Organisieren von Materialien mittels des Systems nach einem der Ansprüche 1 bis 6,
bei welchem die Materialien in Boxen (101) eingelagert und die Boxen (101) in Stapeln organisiert sind,
wobei die Stapel von Boxen mittels mindestens einer Transportvorrichtung (130) zwischen einem Speichersystem (110) für die Stapel und einer Sortiervorrichtung (140) für die Boxen (101) eines Stapels transportierbar sind, wobei zumindest ein Teil der transportierten Boxen (101) des einen Stapels von Boxen (101) in einem Ladebereich der Sortiervorrichtung (140) übernommen wird,
wobei die Sortiervorrichtung mindestens einen ersten Greifer (142) aufweist, welcher den zu übernehmenden Teil der Boxen (101) aus dem Stapel aufnimmt und hält,
wobei die aufgenommenen Boxen (101) mittels des mindestens einen ersten Greifers (142) angehoben werden, so dass die Transportvorrichtung (130) ohne den angehobenen Teil der Boxen (101) aus dem Ladebereich des Greifers (142) verfahrbar ist,
wobei
- entweder mindestens ein zweiter Greifer (142) vorgesehen ist, welcher einen weiteren Teil oder alle weiteren Boxen von dem Transportsystem anhebt und so die Anzahl der Boxen auf dem Transportsystem weiter verringert und anschließend die Transportvorrichtung dem ersten Greifer zugestellt wird, welcher die von dem ersten Greifer gehaltenen Boxen an das Transportsystem übergibt,
oder
- dass zu dem Ladebereich des mindestens einen ersten Greifers benachbart ein beweglicher Ablagebereich angeordnet ist, welcher Boxen von der Transportvorrichtung oder dem mindestens einen ersten Greifer (142) aufnimmt und zwischenlagert, wodurch die Transportvorrichtung bzw. der mindestens eine erste Greifer (142) für die Aufnahme von Boxen des jeweils anderen Teils, also des Greifers bzw. der Transportvorrichtung, freigegeben ist und wobei die zwischengelagerten Boxen an eine leere Transporteinrichtung oder an den mindesten einen ersten Greifer für eine Umsortierung der Reihenfolge von Boxen auf der Transporteinrichtung (130) übergeben werden.
